# EUROPEAN PATENT SPECIFICATION

(11) **EP 0 949 158 B1**
(45) Date of publication and mention of the grant of the patent: **31.07.2002**
(21) Application number: 99660056.5
(22) Date of filing: 31.03.1999
(51) Int. Cl.: B65D 75/66

(54) **Means for opening the protective coating on cheeses**
Vorrichtung zum Öffnen der Beschichtung eines Käses
Moyens pour ouvrir la couche protective des fromages

(30) Priority: 09.04.1998 FI 980827
(43) Date of publication of application: 13.10.1999
(73) Proprietor: VALIO OY, 00370 Helsinki (FI)
(72) Inventor: Junkkarinen, Leo Päiviö, 02210 Espoo (FI); Kärki, Matti Pekka, 00730 Helsinki (FI)
(74) Representative: Puranen, Maija-Liisa

(56) References cited:
- FR-A- 2 144 959
- US-A- 4 643 321

## Description

### BACKGROUND OF THE INVENTION

The invention relates to cheeses that are waxed or coated in some other manner, and particularly to opening the coating of such cheeses. The invention concerns an opening mechanism for opening the cheese coating, providing the cheese with the opening mechanism and the coated cheese provided with the opening mechanism. The invention can be typically applied to e.g. wax-coated ball-shaped cheeses.

Large ball-shaped cheeses, e.g. Edam balls with a diameter exceeding 10 cm, are tightly coated with wax or like material. Wax coating provides a surface that protects the cheese against drying, microbiological contamination and fouling. Wax coating of this kind is very tight, and consequently it is difficult to open up the coating and it will not succeed without implements, such as a knife. Currently, there are no large cheeses available on the market, which would be provided with a coat opening mechanism, the only way to get the coating open is to use implements, such as a knife. However, minor cheeses are known, e.g. so-called Baby-Bell, which is a kind of mini-cheese-wheel and in which an opening strip is arranged to circle the cheese under the coating. By pulling the opening strip the coating is divided into two parts and the surface of the cheese is exposed. However, this kind of opening system is not applicable to cheeses of any considerable size. Such a device is described in prior art document FR-A-2144959.

### BRIEF DESCRIPTION OF THE INVENTION

The object of the invention is to provide a device and a method, whereby the above problems can be solved. This is achieved with an arrangement for opening a cheese coating, which is characterized by comprising
a double-ring structure which comprises a first ring-shaped part with a point of discontinuity/weakening and a second ring-shaped part and necks connecting the ring-shaped parts, and
a tear-off means that is arranged in the first ring-shaped part adjacent to the point of discontinuity/weakening,
whereby the last connecting neck in the direction of tearing is substantially more resistant than the other connecting necks.

The invention also relates to a method for providing a cheese with an arrangement according to the invention. The method is characterized by comprising the following steps:
a) the arrangement is fitted on the cheese in such a way that the ring-shaped parts follow the cheese surface,
b) the cheese is coated in such a way that the ring-shaped parts remain under the coating and the tear-off means remains outside the coating, and
c) the coating is allowed to cure.

The invention also concerns coated cheese, which is provided with the arrangement according to the invention for opening up the coating.

The arrangement according to the invention has an advantage that the cheese coating can be opened and the cheese surface exposed readily and smoothly without a knife or any other implements. This is based on the idea that the first ring-shaped part constitutes a tear-off strip, by means of which a cut that extends around the cheese and goes down to the cheese surface is achieved, and further, by lifting the tear-off strip the same grip allows the top of the cheese to be exposed. To fit the arrangement according to the invention on the cheese using the method of the invention at the cheese coating step is very easy and simple.

### BRIEF DESCRIPTION OF THE DRAWINGS

In the following, the invention will be described in connection with preferred embodiments with reference to the attached drawings, wherein
Figure 1 is a top view of an arrangement according to the invention in unopened form,
Figure 2 is a top view of the arrangement according to the invention in opened form,
Figure 3 is a side view of a ball cheese provided with the arrangement according to the invention, and
Figure 4 is a side view of a coated ball cheese whose coating is opened by means of the arrangement according to the invention.

### DETAILED DESCRIPTION OF THE INVENTION

In the following, the invention will be described by way of example applied to an Edam ball whose weight is 850 g and diameter about 11 cm.

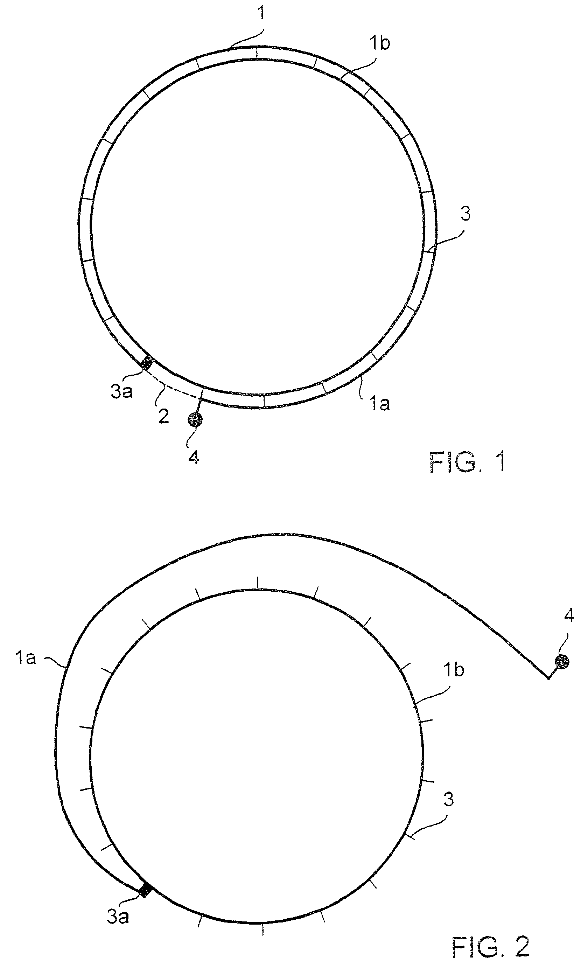

An arrangement 1 of the invention, described in Figure 1, comprises a double-ring structure 1a, 1b, which comprises a first ring-shaped part 1a with a point of discontinuity/weakening 2. The double-ring structure further comprises a second ring-shaped part 1b and necks 3 connecting the ring-shaped parts 1a and 1b. The arrangement also comprises a tear-off means 4, which is arranged in the first ring-shaped part adjacent to the point of discontinuity/weakening 2. The connecting necks 3 are thin, easily breakable, apart from the last connecting neck 3a in the direction of tearing, which is substantially more resistant than the other connecting necks 3.

In connection with the present invention, the expression 'point of discontinuity/weakening' refers to an aperture in the first ring-shaped part 1a, i.e. the first ring-shaped part is cut at said point, or alternatively, the first ring-shaped part 1a comprises a weakened portion at said point, for instance a portion corresponding to the thin connecting neck 3. An embodiment comprising a cut structure is advantageous. In the structure of the present invention it is substantial that the tear-off means 4 and the reinforced connecting neck 3a are arranged on the opposite sides of the point of discontinuity/weakening 2, whereby the reinforced connecting neck 3a is the last in order in the direction of tearing when the tear-off means 4 is pulled.

Figure 2 shows the arrangement 1 according to the invention in opened form. The first ring-shaped part 1a is detached from the second ring-shaped part 1b by pulling the tear-off means 4, whereby the thin connecting necks 3 break, apart from the last, reinforced connecting neck 3a.

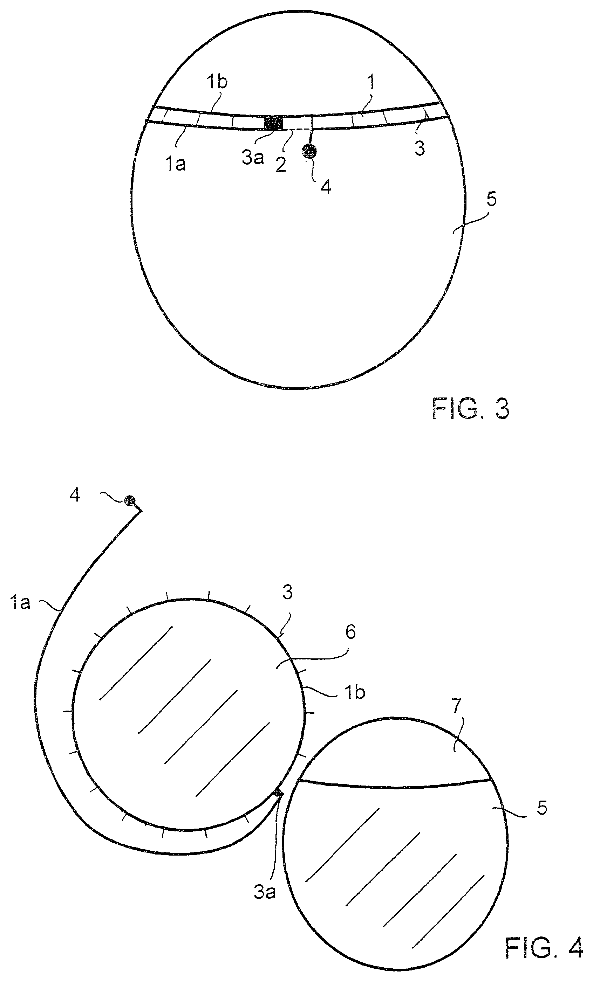

When applying the arrangement 1 according to the invention to the ball cheese, the double-ring structure 1a, 1b is substantially circular in shape and the diameter of the first ring-shaped part 1a advantageously exceeds that of the second ring-shaped part 1b. This structure follows as closely as possible the convex, spherical surface of the cheese and the arrangement is easy to fit thereon as tightly as possible. The advantageousness of this structure appears also from Figure 3.

Figure 3 illustrates fitting of the arrangement according to the invention on the surface of the ball cheese. The arrangement is fitted in connection with cheese coating, which in practice proceeds in such a way that the arrangement 1 is first laid on the ball cheese 5 to be coated, on the upper half of the ball cheese as appears from Figure 3, and thereafter the cheese will be coated. Coating can be typically effected in such a way, for instance, that melted cheese wax is poured on the cheese once or a plurality of times. Cheese wax refers to paraffins and microcrystalline waxes. The paraffins are a mixture of unbranched alkanes, while the microcrystalline waxes are branched alkanes. Cheese can also be coated by immersing the cheese to be coated in melted cheese wax. The double-ring structure 1a, 1b remains on the surface of the cheese, under the wax, and the tear-off means 4 remains outside the coating. The wax poured on the cheese starts curing immediately. If necessary, curing can be accelerated by cooling.

In the finished, coated product, only the tear-off means 4 is visible, whereas the double-ring structure 1a, 1b remains under the coating. After the wax is cured, the finished, coated cheeses can be wrapped in cellophane or like protective material, whereafter they are packed in cartons for transportation and storage.

Figures 2 and 4 illustrate how the arrangement according to the invention for opening up the cheese coating works in practice. When the tear-off means 4 is pulled, the thin connecting necks 3 break, whereby the first ring-shaped part 1a is detached from the second ring-shaped part 1b and it cuts open the cheese coating on top of the ring-shaped part 1a down to the cheese surface. Tearing is continued around the cheese while breaking the thin connecting necks, whereby a narrow track of the cheese surface, corresponding to the first ring-shaped part 1a, is exposed (not shown in the figures). The last connecting neck of the double-ring structure, i.e. the reinforced connecting neck 3a is so resistant that it will not break easily unlike the thinner necks.

When the first ring-shaped part 1a is detached from the second ring-shaped part 1b, apart from the last, reinforced connecting neck 3a, i.e. the ring-shaped parts are only connected to each other by means of the reinforced connecting neck 3a, and when the tear-off means 4 or the detached ring-shaped part 1a is further pulled, the second ring-shaped part 1b starts detaching a calotte portion 6 of the ball cheese coating while the ring-shaped part 1b supports the edge of the calotte. The second ring-shaped part 1b remains attached to the coating's calotte portion providing support thereto. Finally, the calotte portion 6 of the coating is fully detached and the cheese surface 7 under the calotte portion 6 of the coating is exposed. After consuming some of the cheese, the calotte portion of the coating can be fitted back to protect the remaining cheese.

The diameter of the double-ring structure 1a, 1b according to the invention will be adjusted to the measurements of the cheese. When a ball cheese is concerned, the diameter of the ring structure is slightly shorter than the diameter of the cheese, for instance, for a ball cheese with a diameter of about 11 cm, the diameter of the first ring-shaped part 1a may be about 10 cm and of the second ring-shaped part 1b slightly less, e.g. about 9.5 cm. This kind of ring structure is a suitable fit on the upper half of the cheese.

The arrangement according to the invention can be made of various materials, for instance plastic or steel or plastic-coated steel. The plastic material of the arrangement can be polyethene, but it can also be e.g. polypropylene, polystyrene, polyvinyl chloride, polyamide, polycarbonate or polyethyleneterephtalate. Plastic material is advantageous, since hot wax, e.g. of about 110 °C, to be poured on the arrangement and the cheese softens the double ring made of the plastic material, and the double ring fits tightly on the surface of the cheese. At the coating's curing step, when temperature is lowered, the plastic ring contracts slightly. Thus it is nearly imperceptible in the coated final product, naturally apart from the tear-off means which remains visible outside the coating.

In the above, the arrangement and method according to the invention were applied to products of ball cheese type, but it is also applicable to cheeses in other shapes, for instance to cheeses in the shape of a cylinder, cone, pyramid, wheel, cake or rectangle or to bar-shaped cheeses. The arrangement is useful for hard, semi-hard or semi-soft, ripened cheeses as well as for unripened cheeses that are prepared to have a specific shape by pressing in a mould, by natural compression or in some other manner. It is essential that the cheese comprises a coating that has to be opened up.

The shape of the double-ring structure depends on the shape of the cheese, particularly on the cross section of the cheese. In the case of the ball cheese, the cross section is substantially circular, whereby the double-ring structure is also substantially circular. The double-ring structure can also be a square, rectangle, hexagon or triangle in shape, depending on the cross section of the cheese.

If the cheese is convex or tapering in shape, i.e. for example spherical, conical or pyramidical, the diameter of the first ring-shaped part 1a advantageously exceeds that of the second ring-shaped part 1b. The ring structure like this follows as closely as possible the surface of the cheese.

When cheeses with unchanging perimeter, such as rectangular or cylindrical cheeses or bar-shaped cheeses are concerned, the diameter of the first ring-shaped part 1a advantageously equals the second ring-shaped part 1b.

Cheese coating material may also vary. The coating is typically food grade wax or like material which is impermeable to water and aromas. The coating is preferably such that is arranged closely on the surface of the cheese by pouring it in melted state on the cheese surface, whereafter it is cured. A) cheese wax, described above, b) natural wax derived from animals (e.g. beeswax, whale wax and wool wax or plants (e.g. carnauba wax, candelilla wax, bamboo wax, esparto wax, herb wax and apple-skin wax, c) mono- and diglycerides of fatty acids, d) hard fats, e) chocolate or f) plastic emulsions can be used as a coating. A coating or membrane made from whey protein or other biological or organic material or organic compound can also serve as a coating. The coating can also be a composite coating or membrane, which is made of one or more plastic materials or laminated plastic sheets. The plastic or laminated plastic sheets can also be combined with the above-mentioned organic or other coatings.

It is obvious to the person skilled in the art that as technology advances the basic idea of the invention can be implemented in a variety of ways. The invention and its embodiments are thus not restricted to the above-described examples, but they may vary within the scope of the accompanying claims.

## Claims

1. An arrangement (1) for opening a cheese coating, **characterized by**
a double-ring structure (1a, 1b) which comprises a first ring-shaped part (1a) with a point of discontinuity/weakening (2) and a second ring-shaped part (1b) and necks (3) connecting the ring-shaped parts (1a, 1b), and
a tear-off means (4) that is arranged in the first ring-shaped part (1a) adjacent to the point of discontinuity/weakening (2),
whereby the last connecting neck (3a) in the direction of tearing is substantially more resistant than the other connecting necks (3).

2. An arrangement as claimed in claim 1, **characterized in that** the point of discontinuity/weakening (2) comprises an aperture.

3. An arrangement as claimed in claim 1 or 2, **characterized in that** the diameter of the first ring-shaped part (1a) exceeds that of the second ring-shaped part (1b).

4. An arrangement as claimed in claim 3, **characterized in that** the double-ring structure (1a, 1b) is substantially circular in shape.

5. An arrangement as claimed in any one of claims 1 to 4, **characterized by** being made of plastic.

6. A method for providing a cheese with the arrangement as claimed in any one of the preceding claims, **characterized by** comprising the following steps:
a) the arrangement (1) is fitted on the cheese (5) in such a way that the ring-shaped parts (1a, 1b) follow the cheese surface,
b) the cheese is coated in such a way that the ring-shaped parts (1a, 1b) of the arrangement (1) remain under the coating and the tear-off means (4) remains outside the coating, and
c) the coating is allowed to cure.

7. A coated cheese, **characterized by** being provided with the arrangement (1) as claimed in any one of the claims 1 to 5 for opening up the cheese coating.

## Patentansprüche

1. Vorrichtung (1) zum Öffnen der Beschichtung eines Käses, **gekennzeichnet durch:**
eine Doppel-Ring-Struktur (1a,1b), die einen ersten ringförmigen Teil (1a) mit einem Punkt einer Diskontinuität/Schwächung (2), einen zweiten ringförmigen Teil (1b) und Ansätze (3), die die ringförmigen Teile (1a, 1b) verbinden, umfasst; und
ein Aufreißmittel (4), das im ersten ringförmigen Teil (1a), dem Punkt der Diskontinuität/Schwächung (2) benachbart, angeordnet ist,
wobei der letzte Verbindungsansatz (3a) in Richtung des Aufreißens wesentlich widerstandsfähiger ist als die anderen Verbindungsansätze (3).

2. Vorrichtung nach Anspruch 1, **dadurch gekennzeichnet, dass** der Punkt der Diskontinuität/Schwächung (2) eine Öffnung umfasst.

3. Vorrichtung nach Anspruch 1 oder 2, **dadurch gekennzeichnet, dass** der Durchmesser des ersten ringförmigen Teils (1a) den des zweiten ringförmigen Teils (1b) übertrifft.

4. Vorrichtung nach Anspruch 3, **dadurch gekennzeichnet, dass** die Doppel-Ring-Struktur (1a,1b) im Wesentlichen kreisförmig ist.

5. Vorrichtung nach einem der Ansprüche 1 bis 4, **dadurch gekennzeichnet, dass** sie aus Plastik hergestellt ist.

6. Verfahren zur Herstellung eines Käses mit der Vorrichtung, wie sie in einem der vorstehenden Ansprüche beansprucht ist, **dadurch gekennzeichnet, dass** es folgende Schritte umfasst:
a) die Vorrichtung (1) wird an den Käse (5) so angepasst, dass die ringförmigen Teile (1a,1b) der Oberfläche des Käses folgen,
b) der Käse wird so beschichtet, dass die ringförmigen Teile (1a,1b) der Vorrichtung (1) unter der Beschichtung bleiben und das Aufreißmittel (4) außerhalb der Beschichtung bleibt, und
c) die Beschichtung wird Aushärten gelassen.

7. Beschichteter Käse, **dadurch gekennzeichnet, dass** er mit der Vorrichtung (1), wie in einem der Ansprüche 1 bis 5 beansprucht, zum Öffnen der Käsebeschichtung versehen ist.

## Revendications

1. Disposition (1) pour ouvrir un revêtement de protection de fromage,
**caractérisée par** :
- une structure (1a, 1b) à double anneaux qui comporte une première partie (1a) en forme d'anneau ayant un point de discontinuité/ affaiblissement (2) et une deuxième partie (1b) en forme d'anneau et des cols (3) reliant les parties (1a, 1b) en forme d'anneau, et
- des moyens (4) de déchirement qui sont disposés dans la première partie (1a) en forme d'anneau adjacents au point de discontinuité/affaiblissement (2),
le dernier col (3a) de connexion dans la direction de déchirement étant sensiblement plus résistant que les autres cols (3) de connexion.

2. Disposition suivant la revendication 1, **caractérisée en ce que** le point de discontinuité/affaiblissement (2) comprend une ouverture.

3. Disposition suivant la revendication 1 ou 2, **caractérisée en ce que** le diamètre de la première partie (1a) en forme d'anneau dépasse celui de la deuxième partie (1b) en forme d'anneau.

4. Disposition suivant la revendication 3, **caractérisée en ce que** la structure (1a, 1b) à double anneaux est sensiblement de forme circulaire.

5. Disposition selon l'une quelconque des revendications 1 à 4, **caractérisée par** le fait d'être réalisée en matière plastique.

6. Procédé pour munir un fromage de la disposition suivant l'une quelconque des revendications précédentes, **caractérisé par** le fait de comporter les étapes qui consistent en ce que :
a) la disposition (1) est adaptée sur le fromage (5) de manière que les parties (1a, 1b) en forme d'anneau suivent la surface du fromage,
b) le fromage est revêtu de telle manière que les parties (1a, 1b) en forme d'anneau de la disposition (1) restent sous le revêtement et les moyens (4) de déchirement restent à l'extérieur du revêtement, et
c) le revêtement est laissé durcir.

7. Fromage revêtu, **caractérisé par** le fait d'être muni de la disposition (1) suivant l'une quelconque des revendications 1 à 5 pour l'ouverture du revêtement de protection du fromage.
